# EUROPEAN PATENT SPECIFICATION

(11) **EP 3 780 243 B1**
(45) Date of publication and mention of the grant of the patent: **27.11.2024**
(21) Application number: 19774844.5
(22) Date of filing: 06.03.2019
(51) Int. Cl.: H01M 10/12, H01M 4/14, H01M 4/62, H01M 10/08, H01M 10/16, H01M 4/56

(54) **LEAD-ACID BATTERY**
BLEISÄUREBATTERIE
BATTERIE AU PLOMB-ACIDE

(30) Priority: 29.03.2018 JP 2018065488
(43) Date of publication of application: 17.02.2021
(73) Proprietor: GS Yuasa International Ltd., Kisshoin, Minami-ku, Kyoto-shi, Kyoto 601-8520 (JP)
(72) Inventor: SEKIYA, Kazuki, Kyoto-shi, Kyoto 601-8520 (JP); SASAKI, Eriko, Kyoto-shi, Kyoto 601-8520 (JP)
(74) Representative: Isarpatent
(86) International application number: PCT/JP2019/008727
(87) International publication number: WO 2019/188056

(56) References cited:
- WO-A1-2012/017702
- WO-A1-2012/042917
- JP-A- 2016 154 131
- JP-A- 2016 154 132
- JP-A- 2017 059 480
- JP-A- 2017 174 821
- US-A1- 2016 240 852
- D.P. BODEN ET AL: "Optimization studies of carbon additives to negative active material for the purpose of extending the life of VRLA batteries in high-rate partial-state-of-charge operation", JOURNAL OF POWER SOURCES, vol. 195, no. 14, 15 July 2010 (2010-07-15), CH, pages 4470 - 4493, XP055597543, ISSN: 0378-7753, DOI: 10.1016/j.jpowsour.2009.12.069
- BERNARDO MARINHO ET AL: "Electrical conductivity of compacts of graphene, multi-wall carbon nanotubes, carbon black, and graphite powder", POWDER TECHNOLOGY, ELSEVIER, BASEL (CH), vol. 221, 14 January 2012 (2012-01-14), pages 351 - 358, XP028473247, ISSN: 0032-5910, [retrieved on 20120121], DOI: 10.1016/J.POWTEC.2012.01.024
- "Handbook of batteries (the first)", ISBN: 4-254-22034-0, pages: 400

## Description

### TECHNICAL FIELD

The present invention relates to a lead-acid battery.

### BACKGROUND ART

Lead-acid batteries are being used for various uses in addition to in-vehicle and industrial use. A lead-acid battery includes a negative electrode plate, a positive electrode plate, and an electrolyte solution. A separator is disposed between the negative electrode plate and the positive electrode plate.

The lead-acid battery is sometimes used in a poor charged state called a partial state of charge (PSOC). For example, the lead-acid battery is used in PSOC during idling stop-start (ISS).

Patent Document 1 describes that in a lead-acid battery used in PSOC, the specific gravity of an electrolyte solution tends to decrease due to stratification, and as a result, a minute short circuit occurs. Further, it is described that a length A between outer edges of lugs at both ends immediately under at least one strap of positive and negative electrode straps is smaller than a length B between the outer end faces of upper frame grid portions on electrode plates located at both ends of electrode plates out of electrode plates connected to at least one of the straps, and a porous layer is provided at least between the separator and the positive electrode plate or between the separator and the negative electrode plate, thereby preventing a permeation-induced short circuit.

Patent Document 2 proposes that in a lead-acid battery used in PSOC, graphite or carbon fiber is contained in a negative electrode material, and the ratio N/P of the mass N of the negative electrode material to the mass P of the positive electrode material per lead-acid battery is 0.62 or more. It is described that as a result, the permeation-induced short circuit due to graphite or carbon fiber hardly occurs, and a lead-acid battery having excellent life performance in an environment with deep discharge, such as PSOC, can be provided. Also, it is described that when Al ions are contained in an electrolyte solution, the life is improved, and when Li ions are contained in the electrolyte solution, the permeation-induced short circuit is prevented.
Patent Documents 3 and 4 describe lead-acid batteries according to the preamble part of independent claim 1.

### PRIOR ART DOCUMENTS

### PATENT DOCUMENTS

Patent Document 1: JP-A-2017-054980
Patent Document 2: JP-A-2016-154132
Patent Document 3: US-A-2016/240852
Patent Document 4: JP-A-2017 174821

### SUMMARY OF THE INVENTION

### PROBLEMS TO BE SOLVED BY THE INVENTION

As proposed in Patent Document 2, the life performance under the PSOC condition can be expected to be improved by containing the carbon material in the negative electrode material, but as proposed in Patent Document 1, in the PSOC application, a minute short circuit may occur due to stratification.

### MEANS FOR SOLVING THE PROBLEMS

According to claim 1, one aspect of the present invention relates to a lead-acid battery comprising:
a negative electrode plate;
a positive electrode plate;
an element including a separator interposed between the negative electrode plate and the positive electrode plate; and
an electrolyte solution,
wherein
the negative electrode plate includes a negative electrode material containing a first carbon material and a second carbon material,
the first carbon material has a particle size of 32 pm or more,
the second carbon material has a particle size of less than 32 pm, wherein said particle size of the first carbon material and the second carbon material is determined by wet sieving disclosed in Japanese Industrial Standards (JIS) Z8815: 1994 as disclosed below,
a distance D between the positive electrode plate and the negative electrode plate and a maximum thickness T of the separator satisfy -0.1 mm ≤ D - T ≤ 0.1 mm, wherein said distance D is determined by a method disclosed below, and said maximum thickness T is determined by a method disclosed below, characterized in that:
   a ratio of powder resistance R2 of the second carbon material to powder resistance R1 of the first carbon material: R2/R1 is 20 or more and 200 or
   less, wherein said powder resistance is determined in accordance with JIS K 7194: 1994 under 3.18 MPa pressure as disclosed below.

### ADVANTAGES OF THE INVENTION

The lead-acid battery according to the present invention can prevent the permeation-induced short circuit when used in PSOC.

### BRIEF DESCRIPTION OF THE DRAWINGS

Fig. 1 is an exploded perspective view in which a part of a lead-acid battery according to an embodiment of the present invention has been cut away.
Fig. 2 is a diagram showing the relationship between a ratio R2/R1 and a curvature ratio of a positive electrode.
Fig. 3 is a diagram showing the relationship between the ratio R2/R1 and an occurrence rate of a permeation-induced short circuit.
Fig. 4 is a diagram showing the relationship between a (D - T) value and the curvature ratio of the positive electrode.
Fig. 5 is a diagram showing the relationship between the (D - T) value and the occurrence rate of the permeation-induced short circuit.
Fig. 6 is a diagram showing transition of a discharge end voltage in a deep discharge cycle test.
Fig. 7 is a diagram showing the relationship between regenerative acceptance performance and ion species in an electrolyte solution.
Fig. 8 is an explanatory view of measurement points for the thickness of an electrode plate.
Fig. 9 is an explanatory view of a method for measuring the amount of curvature (a lifting distance from a horizontal table) of a positive electrode plate.

### MODE FOR CARRYING OUT THE INVENTION

As defined in claim 1, an aspect of the present invention relates to a lead-acid battery, and the lead-acid battery includes: a negative electrode plate, a positive electrode plate, an element including a separator interposed between the negative electrode plate and the positive electrode plate, and an electrolyte solution. The negative electrode plate includes a negative electrode material containing a first carbon material and a second carbon material. The first carbon material has a particle size of 32 pm or more, and the second carbon material has a particle size of less than 32 pm. The ratio R2/R1 of powder resistance R2 of the second carbon material to powder resistance R1 of the first carbon material (hereinafter referred to as ratio R2/R1) is 20 or more and 200 or less. Further, the distance D between the positive electrode plate and the negative electrode plate (hereinafter also referred to as inter-electrode distance D) and the maximum thickness T of the separator satisfy -0.1 mm ≤ D - T ≤ 0.1 mm.

Even when the negative electrode material contains a carbon material, the stratification of the electrolyte solution tends to proceed under a PSOC condition, and when the formation of a conductive network in the negative electrode material is insufficient, lead sulfate is accumulated in the lower portion of the negative electrode plate, and the reaction preferentially proceeds in the upper portion of the negative electrode plate. As a result, the charge-discharge reaction of the positive electrode plate also proceeds in a limited manner in the upper portion. In such a situation, the shape change tends to proceed in the upper portion of the positive electrode plate, and the positive electrode plate is curved. As a result, the separator interposed between the positive electrode plate and the negative electrode plate is pressed, and electrons are transferred to and from a lead compound permeated into the separator, while the reaction further concentrates on the upper portions of the positive electrode plate and the negative electrode plate, thereby promoting the deposition of lead. As a result, a permeation-induced short circuit occurs. When the charge-discharge reaction concentrates on a part of the electrode plate as described above, it is difficult to prevent the occurrence of the permeation-induced short circuit.

On the other hand, when the negative electrode material contains the first carbon material having a particle size of 32 pm or more, and the second carbon material having a particle size of less than 32 pm, and the ratio R2/R1 is 20 or more and 200 or less, the conductive network is favorably formed in the negative electrode material, so that the accumulation of lead sulfate in the lower portion of the negative electrode plate is prevented even under the PSOC condition. As a result, the charge-discharge reaction proceeds in a wider region of each of the positive electrode plate and the negative electrode plate.

It is conceivable that when the ratio R2/R1 is less than 20 or more than 200, a good conductive network is not formed in the negative electrode material, and the conductive network becomes susceptible to degradation. It is thus conceivable that, when the cycle is repeated under the PSOC condition, lead sulfate accumulates in the lower portion of the negative electrode plate, the charge-discharge reaction of the positive electrode plate proceeds in a limited manner in the upper portion, and the positive electrode plate is curved, leading to the permeation-induced short circuit. For forming a better conductive network, the ratio R2/R1 is preferably set to 27 or more 155 or less.

Note that carbon materials having various powder resistances are known. It is known that the powder resistance of a powder material varies depending on the shape of particles, the particle size, the internal structure of the particles, and the crystallinity of the particles. According to the conventional common technical knowledge, the powder resistance of the carbon material has no direct relation to the resistance of the negative electrode plate and has not been considered to affect PSOC lifetime performance.

When a (D - T) value (the difference between the inter-electrode distance D and the maximum thickness T of the separator) exceeds 0.1 mm, the curvature of the positive electrode plate proceeds, so that a force by which each of the positive electrode plate and the negative electrode plate presses the separator increases locally. When the (D - T) value is smaller than -0.1 mm, the force by which each of the positive electrode plate and the negative electrode plate presses the separator is increased entirely. Therefore, in either case, electrons are easily transferred to and from the lead compound permeated into the separator, the lead deposition is promoted, and it becomes difficult to prevent the permeation-induced short circuit. That is, for preventing the permeation-induced short circuit, it is important to control the physical properties of the carbon material to be contained in the negative electrode material and to control the (D - T) value within a predetermined range.

On the other hand, by setting the (D - T) value being to 0.1 mm or less, the amount of the electrolyte solution around the electrode plate decreases, and the specific gravity of the electrolyte solution after discharge decreases. Therefore, the charge acceptability (efficiency) is improved, and the entire surface of the electrode plate is easily used when the cycle is repeated, so that the transition of the discharge voltage tends to be kept high. For example, a terminal discharge voltage in a deep discharge cycle test at a depth of discharge (DOD) 50% is maintained high by setting the (D - T) value to 0.1 mm or less. The effect as thus described is more remarkable in the case of a liquid type lead-acid battery than in the case of a valve regulated lead-acid battery, and it is conceivable that it is also effective in preventing the permeation-induced short circuit.

When the (D - T) value satisfies -0.1 mm ≤ D - T ≤ 0 mm, the effect of preventing the permeation-induced short circuit is more remarkable. This is considered to be because an appropriate pressure is applied to the element in the laminating direction of the electrode plates, and the effect of preventing the curvature of the positive electrode plate and the effect of uniformity of the charge-discharge reaction by a good conductive network in the negative electrode material are exerted in a better balance.

The total number of positive electrode plates and negative electrode plates included in the element may be, for example, 12 or more. The larger the number of electrode plates, the larger the number of electrodes forming the inter-electrode distance D. Hence the influence of the inter-electrode distance D tends to become apparent. Therefore, the effect of controlling the ratio R2/R1 and the (D - T) value also increases.

The electrolyte solution may contain aluminum ions. It has been considered that the aluminum ions act to improve the regenerative acceptability. The good conductive network in the negative electrode material and the aluminum ions act synergistically to promote the uniformity of the charge-discharge reaction. It is thus conceivable that the effect of preventing the curvature of the positive electrode plate is enhanced, and that the effect of preventing the permeation-induced short circuit is also enhanced.

The concentration of the aluminum ions may be, for example, 0.02 mol/L to 0.2 mol/L. When the concentration is 0.02 mol/L or more, the effect of improving the regenerative acceptability by the aluminum ions can be clearly obtained, which becomes more obvious at 0.04 mol/L or more. Further, by setting the concentration of the aluminum ions to 0.2 mol/L or less, a better low-temperature high-rate performance can be maintained.

The influences of controlling the ratio R2/R1 and the (D - T) value on the life of the lead-acid battery, the permeation-induced short circuit, and the like can be evaluated by the following methods.

### (1) Discharge end voltage in deep discharge cycle test

A deep discharge cycle test is performed at a depth of discharge (DOD) of 50% (50% DOD) to evaluate the transition of the terminal discharge voltage. Specifically, a chemically converted lead-acid battery is fully charged, the discharge end voltage during the 50% DOD discharge is measured at 40°C under the following charge-discharge conditions, and the transition is monitored. The time when the voltage during the 50% DOD discharge falls below 1.67 V/cell is defined as the life.

### <Charge-discharge conditions>

Discharge: discharge at a constant current of Y × IₙA for two hours.

Charge: charge at a constant voltage of 2.6 V/cell and the maximum current of Y × IₙA for five hours.

Here, IₙA is a current value (A) obtained by dividing the nominal n-hour rate capacity (Ah) of the battery by n. Y = n/4. For example, when the battery has a nominal 20-hour rate capacity of 30 Ah, I₂₀A = 1.5 A and Y = 5.

### (2) Permeation-induced short circuit acceleration test

In the chemically converted lead-acid battery in the fully charged state, after (A) to (C) described below are repeated five times in a water tank at 25°C, (D) is performed, and the battery is then disassembled to evaluate permeation marks on the separator.

### <Charge-discharge conditions>

(A) discharge to 1.0 V/cell at a constant current of IₙA.
(B) connect a 10-Ω resistor and leave for 28 days.
(C) charge at 2.4 V/cell for 30 minutes with an upper current limit of 50 A.
(D) charge at a constant current of IₙA for 27 hours.

### (2-1) Inter-electrode distance D

The chemically converted lead-acid battery in the fully charged state is disassembled, an element is taken out, and the inter-electrode distance D is calculated from the equation: "polar distance D = (pitch - positive electrode plate thickness - negative electrode plate thickness)/2". The pitch is the center-to-center distance between lugs of a pair of adjacent positive electrode plates. The pitches are determined for all pairs of adjacent positive electrode plates included in the element, and the average value thereof is substituted into the above equation. For example, when the element is made up of six positive electrode plates and seven negative electrode plates, the pitch is measured at five points. When the element is made up of seven positive electrode plates and seven negative electrode plates, the pitch is measured at six points. The distance between the centers of the lugs may be measured in the lower portion of the cross-section of the strap connecting the lugs of the plurality of positive electrode plates in parallel. In a lead-acid battery provided with a plurality of elements connected in series, the average value of pitches in any two elements (cells) is determined. For example, in the case of a 12 V lead-acid battery including six elements, the pitch is measured and averaged in the first and fourth elements counted from the positive electrode terminal side.

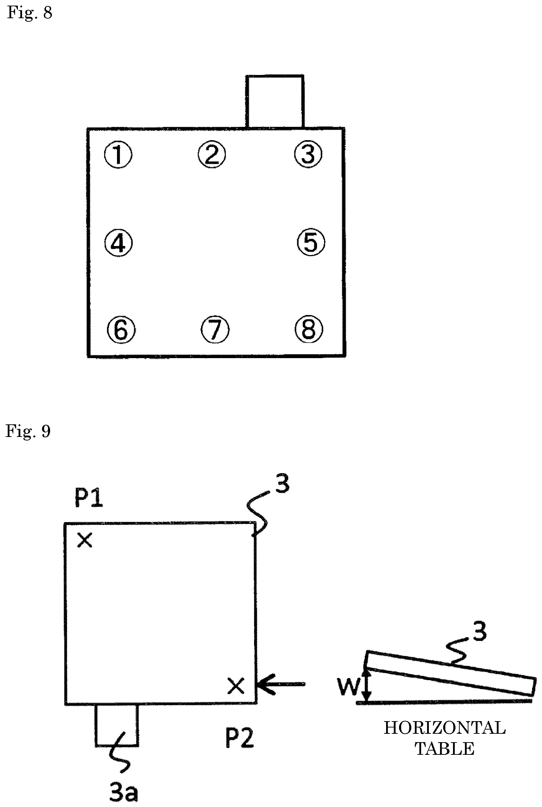

The thickness of the positive electrode plate is an average value of the thicknesses of all the positive electrode plates included in the element, and the thickness of the negative electrode plate is an average value of the thicknesses of all the negative electrode plates included in the element. The thickness of each electrode plate is averaged by measuring three points near both ends and the center per one side (eight points in total: points indicated by numerals 1 to 8 in Fig. 8) with a micrometer, for example, along the peripheral edge of the electrode plate. The positive electrode plate is washed to remove sulfuric acid and dried under atmospheric pressure, and then the thickness thereof is measured. The negative electrode plate is washed to remove sulfuric acid and dried in vacuum (dried under pressure below atmospheric pressure), and then the thickness thereof is measured.

When the separator and a mat are used together in the element, and when the mat mainly made of a nonwoven fabric is stuck to the electrode plate, the thickness of the electrode plate is the thickness including the mat. This is because the mat is used integrally with the electrode plate. However, when the mat is attached to the separator, the thickness of the mat is included in the thickness of the separator.

### (2-2) Maximum thickness T of separator

The maximum thickness of the separator is an average value of the thicknesses of all the separators included in the element (cell). After sulfuric acid is removed from the separator by washing with water and the separator is dried under atmospheric pressure, a cross-sectional photograph of the separator is taken, and the maximum thickness is measured at five points in the cross-sectional photograph and averaged.

The maximum thickness of the separator is the thickness including a base and a rib when the separator includes the base and the rib projecting from at least one main surface of the base. For example, when ribs are formed on both surfaces of the separator, the maximum thickness of the separator is the sum of the thickness of the base, the height from the base of the rib on one main surface, and the height from the base of the rib on the other main surface. At this time, when the height of the rib is different depending on the portion of the base, the rib with the maximum height is selected.

### (2-3) Curvature ratio

After the permeation-induced short circuit acceleration test is performed, the positive electrode plate is removed, which is then washed with water and dried. Next, as shown in Fig. 9, the dried positive electrode plate is placed on the horizontal table, and while an end (p 1) of the lower portion of the positive electrode plate 3 on a lower lug 3a side is pressed, a lifting distance W of an end (p2) of the upper portion of the positive electrode plate 3 on the side opposite to the upper lug 3a from a horizontal table is measured. The lifting distances W are measured for all positive electrode plates included in the element to be measured, and an average value thereof is determined. In a lead-acid battery having a plurality of elements connected in series, an average value in any two elements is determined. For example, in the case of a 12 V lead-acid battery including six elements, the average value of the lifting distances W of all the positive electrode plates, included in the first and fourth elements counted from the positive electrode terminal side, is determined. When the lifting distance W (average value) of the positive electrode plate of the lead-acid battery to be a reference is taken as 100%, the relative value of the lifting distance W of the positive electrode plate of the other lead-acid battery is determined as a curvature ratio.

### (2-4) Occurrence rate of permeation-induced short circuit

After the permeation-induced short circuit acceleration test, an area of a permeation mark (lead mark) on the separator is measured. The area of the permeation mark is determined by performing image processing on a photograph of the separator. In a lead-acid battery having a plurality of elements connected in series, the average value of permeation marks of all separators included in any two elements (in the case of a lead-acid battery containing six elements, the elements in the first and fourth cells from the positive electrode terminal side) is determined. When the permeation mark area of the lead-acid battery to be a reference is taken as 100%, the relative value of the permeation mark area of the other lead-acid battery is determined as an occurrence rate of the permeation-induced short circuit,

### (3) Regenerative acceptance performance

The amount of charge at the time of charge from a 10%-DOD discharge state is evaluated. More specifically, the evaluation is performed at 25°C under the following charge-discharge conditions in the chemically converted lead-acid battery in the fully charged state.

### <Charge-discharge conditions>

Discharge: discharge for Z hours at 2 × IₙA and rest for 12 hours.

Here, the discharge time Z is calculated as Z = nominal n-hour rate capacity (Ah)/(20 x In).

Charge: charge at a constant voltage of 2.42 V/cell and the maximum current of 100 A for 60 seconds.

Hereinafter, a lead-acid battery according to an embodiment of the present invention will be described for each major constituent requirement, but the present invention is not limited to the following embodiments.

### (Negative electrode plate)

The negative electrode plate is usually made up of a negative current collector (negative electrode grid, etc.) and a negative electrode material. When a mat mainly made of a nonwoven fabric is stuck to the negative electrode plate, the mat is assumed to also constitute the negative electrode plate. Here, the negative electrode material is a portion in which the negative current collector and the mat are removed from the negative electrode plate.

The thickness of the negative electrode plate is, for example, from 1.05 mm to 5.0 mm and can be from 1.05 mm to 2.0 mm. When a relatively thin negative electrode plate is used as described above, the influence of the inter-electrode distance D on the amount of curvature of the positive electrode plate and the influence on the occurrence rate of the permeation-induced short circuit become large. When the mat mainly made of a nonwoven fabric is attached to the negative electrode plate, the thickness of the negative electrode plate is the thickness including the mat.

The thickness of the negative electrode plate may be 1.05 mm or more, may be 5.0 mm or less, and may also be 2.0 mm or less.

The negative electrode material contains a negative active material (lead or lead sulfate) that develops a capacity through an oxidation-reduction reaction. The negative active material in a charged state is spongy lead, whereas a non-chemically converted negative electrode plate is usually prepared using lead powder.

The negative electrode material contains a first carbon material and a second carbon material. The first carbon material has a particle size of 32 µm or more, and the second carbon material has a particle size of less than 32 µm. The first carbon material and the second carbon material can be separated and distinguished by a procedure described below.

The negative electrode material may further include an organic expander, barium sulfate, and the like, and may further include other additives as necessary.

Carbon black, graphite, hard carbon, soft carbon, or the like can be used as the first carbon material and the second carbon material. Examples of the carbon black include acetylene black, ketjen black, furnace black, and lamp black. The graphite only needs to be a carbon material including a graphite type crystal structure and may be either artificial graphite or natural graphite.

For the first carbon material and the second carbon material, for example, the type, an average particle size D₅₀, the specific surface area, and the like, of each carbon material may be adjusted so that the ratio (ratio R2/R1) of the powder resistance R2 of the second carbon material to the powder resistance R1 of the first carbon material is 20 or more and 200 or less, or further 27 or more and 155 or less.

The ratio (ratio R2/R1) of the powder resistance R2 of the second carbon material to the powder resistance R1 of the first carbon material may be 20 or more, may also be 27 or more, may be 200 or less, and may also be 155 or less.

The first carbon material is preferably at least one selected from the group consisting of graphite, hard carbon, and soft carbon. The first carbon material preferably contains at least graphite. The second carbon material preferably contains at least carbon black. By selecting the combination of the above materials as the first carbon material and the second carbon material, the ratio R2/R1 is easily adjusted, a better conductive network is easily formed in the negative electrode material, and degradation of the conductive network is less likely to occur.

Of first carbon materials, graphite is a material in which an intensity ratio I_{D}/I_{G} between a peak (D-band) appearing in the range of 1300 cm⁻¹ or more and 1350 cm⁻¹ or less of the Raman spectrum and a peak (G-band) appearing in the range of 1550 cm⁻¹ or more and 1600 cm⁻¹ or less is 0 or more and 0.9 or less.

The content of the first carbon material in the negative electrode material is, for example, 0.05% by mass or more and 3.0% by mass or less, preferably 0.1% by mass or more and 2.0% by mass or less, and more preferably 0.1% by mass or more and 1.5% by mass or less. The content of the second carbon material in the negative electrode material is, for example, 0.03% by mass or more and 1.0% by mass or less, preferably 0.05% by mass or more and 0.5% by mass or less, and more preferably 0.05% by mass or more and 0.3% by mass or less. When the contents of the first carbon material and the second carbon material are within the above range, even a better conductive network is easily formed.

A method for determining or analyzing the physical properties of the carbon materials will be described below.

### (A) Separation of carbon material

The chemically converted lead-acid battery in the fully charged state is disassembled, a negative electrode plate is taken out, sulfuric acid is removed by washing with water, and vacuum drying (drying under pressure lower than atmospheric pressure) is performed. The negative electrode material is collected from the dried negative electrode plate and crushed. To 5 g of the crushed sample, 30 mL of a nitric acid aqueous solution with a concentration of 60% by mass is added and then heated at 70°C. 10 g of disodium ethylenediaminetetraacetate, 30 mL of aqueous ammonia with a concentration of 28% by mass, and 100 mL of water are further added, and the heating is continued to dissolve a soluble matter. The sample as thus pretreated is collected by filtration. The collected sample is subjected to a sieve having a mesh opening of 500 pm to remove a large component such as a reinforcing material, and the component having passed through the sieve is collected as a carbon material.

When the collected carbon material is sieved by a wet process using a sieve having a mesh opening of 32 pm, the material remaining on the sieve without passing through the mesh of the sieve is used as the first carbon material, and the material passing through the mesh of the sieve is used as the second carbon material. That is, the particle size of each carbon material is based on the size of the mesh opening of the sieve. For the wet sieving, Japanese Industrial Standards (JIS) Z8815: 1994 may be referred to.

Specifically, the carbon material is placed on a sieve having a mesh opening of 32 pm and sieved by gently shaking the sieve for 5 minutes while sprinkling ion-exchange water. The first carbon material remaining on the sieve is collected from the sieve by flowing ion-exchanged water and is separated from the ion-exchanged water by filtration. The second carbon material having passed through the sieve is collected by filtration using a nitrocellulose membrane filter (mesh opening of 0.1 pm). The collected first carbon material and second carbon material are each dried at a temperature of 100°C for two hours. As the sieve having a mesh opening of 32 pm, a sieve provided with a sieve mesh having a nominal mesh opening of 32 pm, specified in JIS Z 8801-1: 2006, is used.

The content of each carbon particles in the negative electrode material may be determined by measuring the mass of each carbon material separated by the above procedure and calculating the rate (% by mass) of the mass in the 5 g of the crushed sample.

### (B) Powder resistance of carbon material

The powder resistance R1 of the first carbon material and the powder resistance R2 of the second carbon material are values measured for each of the first carbon material and the second carbon material separated by the procedure of (A) above by charging a powder resistance measuring system (e.g., MCP-PD51, manufactured by Mitsubishi Chemical Analytech Co., Ltd.) with 0.5 g of a sample and performing a four-probe method using a low-resistivity-resistivity meter (e.g., Loresta-GX MCP-T700, manufactured by Mitsubishi Chemical Analytech Co., Ltd.) in accordance with JIS K 7194: 1994 under 3.18 MPa pressure.

In the present specification, the fully charged state of the lead-acid battery is a state in which, in the case of a liquid type battery, constant current charge is performed in a water tank at 25°C until the voltage reaches 2.5 V/cell in IₙA, and then the constant current charge is further performed in IₙA for two hours. In the case of a valve regulated battery, the fully charged state means a state in which constant current constant voltage charge of 2.23 V/cell is performed in IₙA in an air tank of 25°C, and the charge is completed when the charge current at the time of the constant voltage charge becomes 0.005 × IₙA or less.

As described above, IₙA is a current value (A) obtained by dividing the nominal n-hour rate capacity (Ah) of the battery by n. For example, for a battery with a nominal 5-hour rate capacity of 30 Ah, I₅A is 6 A, and 0.005 x I₅A is 30 mA.

### (Organic expander)

The negative electrode material can contain an organic expander. The organic expander is an organic polymer containing a sulfur element and generally contains one or more, preferably, a plurality of aromatic rings in the molecule and the sulfur element as a sulfur-containing group. Among the sulfur-containing groups, a sulfonic acid group or a sulfonyl group, which is a stable form, is preferred. The sulfonic acid group may be present in an acid form, or in a salt form such as Na salt.

As the organic expander agent, for example, lignins may be used, and a condensate of an aromatic compound having a sulfur-containing group with formaldehyde may be used. Examples of the lignins include lignin and lignin derivatives. The lignin derivative is lignin sulfonic acid, a salt of lignin sulfonic acid (e.g., alkali metal salt such as sodium salt) or the like. One type of organic expander may be used alone, or two or more types may be used in combination. For example, lignins and the condensate of the aromatic compound having the sulfur-containing group with formaldehyde may be used in combination.

As the aromatic compound, bisphenols, biphenyls, naphthalenes, phenols, or the like are preferably used. Bisphenols, biphenyls, naphthalenes, and phenols are general names of compounds having a bisphenol skeleton, a biphenyl skeleton, a naphthalene skeleton, and a phenol skeleton, respectively, and each may have a substituent. These may be contained alone or in a plurality of types in the organic expander. The bisphenol is preferably bisphenol A, bisphenol S, bisphenol F, or the like. The sulfur-containing group may be directly bonded to the aromatic ring of the aromatic compound and may, for example, be bonded to the aromatic ring as an alkyl chain having the sulfur-containing group. A condensate of N,N'-(Sulfonyl di-4,1-phenylene)bis(1,2,3,4-Tetrahydro-6 methyl-2,4-dioxopyrimidine-5 sulfonamide) or the like may be used as the organic expander.

The content of the sulfur element in the organic expander is, for example, 400 pmol/g or more and 10000 pmol/g or less. The content of the sulfur element in the lignins is, for example, 400 pmol/g or more and 1000 pmol/g or less. The content of the sulfur element in the condensate of the aromatic compound having the sulfur-containing group with formaldehyde is, for example, 2000 pmol/g or more and 10000 pmol/g or less, and is preferably 3000 pmol/g or more and 9000 pmol/g or less.

The content of the organic expander in the negative electrode material is, for example, 0.01% by mass or more and 1.0% by mass or less, and is preferably 0.02% by mass or more and 0.8% by mass or less.

The negative current collector may be formed by casting lead (Pb) or a lead alloy, or may be formed by processing a lead or a lead alloy sheet. Examples of the processing method include an expanding process and a punching process.

The lead alloy used for the negative current collector may be any of a Pb-Sb alloy, a Pb-Ca alloy, and a Pb-Ca-Sn alloy. These lead alloys may further contain at least one element selected from the group consisting of Ba, Ag, Al, Bi, As, Se, Cu, and the like as an additive element.

The negative electrode plate can be formed in such a manner that a negative current collector is filled with a negative electrode paste, which is then cured and dried to prepare a non-chemically converted negative electrode plate, and then the non-chemically converted negative electrode plate is chemically converted. The negative electrode paste is prepared in such a manner that water and sulfuric acid is added to lead powder, a carbon material, an organic expander, various additives used as necessary, and the like, which is then mixed. At the time of curing, it is preferable to cure the non-chemically converted negative electrode plate at high humidity.

The chemical conversion can be performed by charging the element in a state where the element including the non-chemically converted negative electrode plate is immersed in the electrolyte solution containing sulfuric acid in the container of the lead-acid battery. However, the chemical conversion may be performed before the lead-acid battery or the element is assembled. The chemical conversion produces spongy lead.

### (Positive electrode plate)

The positive electrode plate is usually made up of a positive current collector (positive electrode grid, etc.) and a positive electrode material. When a mat mainly made of a nonwoven fabric is stuck to the positive electrode plate, the mat is assumed to also constitute the positive electrode plate. Here, the positive electrode material is a portion in which the positive current collector and the mat are removed from the positive electrode plate.

The positive current collector may be formed similarly to the negative current collector and can be formed by casting lead or a lead alloy, processing a lead or lead alloy sheet, or some other means.

The thickness of the positive electrode plate can be, for example, from 1.05 mm to 10.0 mm and from 1.05 mm to 2.0 mm. Since such a positive electrode plate tends to have a large amount of curvature, the inter-electrode distance D has a large influence on the permeation-induced short circuit. When the mat mainly made of a nonwoven fabric is attached to the positive electrode plate, the thickness of the positive electrode plate is the thickness including the mat.

As a lead alloy used for the positive current collector, a Pb-Ca-based alloy or a Pb-Ca-Sn-based alloy are preferred in terms of corrosion resistance and mechanical strength. The positive current collector may have a lead alloy layer with a different composition, and a plurality of alloy layers may be provided.

The positive electrode material contains a positive active material (lead dioxide or lead sulfate) that develops a capacity through an oxidation-reduction reaction. The positive electrode material may optionally contain other additives as necessary.

A non-chemically converted positive electrode plate is obtained in such a manner that a positive current collector is filled with a positive electrode paste, which is then cured and dried, in accordance with the case of the negative electrode plate. Thereafter, a non-chemically converted positive electrode plate is chemically converted. The positive electrode paste is prepared by kneading lead powder, an additive, water, sulfuric acid, and the like.

### (Separator)

The separator is a porous sheet, and a woven fabric, a nonwoven fabric, a microporous film, or the like, can be used as the porous sheet. The woven fabric and the nonwoven fabric may be mainly made of fibers, and for example, 60% by mass or more of the woven fabric and the nonwoven fabric are formed of fibers. The woven fabric may be mainly made of a woven or knitted fabric of fibers, and the nonwoven fabric may be mainly made of intertwined fibers. As the fiber, glass fiber, polymer fiber, pulp fiber, or the like can be used. Among them, polymer fibers and glass fibers are preferably used in combination. The woven fabric and the nonwoven fabric may contain components in addition to the fibers. Examples of the components in addition to the fibers include an acid-resistant inorganic powder and a polymer as a binder.

The microporous film may be mainly made of components except for fiber components and is obtained by, for example, extrusion molding a composition containing, for example, a pore-forming additive (polymer powder, oil, etc.) or silica into a sheet shape and then removing the pore-forming additive. The microporous film is preferably mainly made of a polymer having acid resistance. Examples of the polymer include polyolefins, acrylic resins, and polyesters such as polyethylene terephthalate. Among them, polyolefins such as polyethylene and polypropylene are preferably used.

The separator may include a base and a rib protruding from at least one main surface of the base. The ribs may be disposed on either the negative electrode plate side or the positive electrode plate side, or may be disposed on both sides. The rib pattern is not particularly limited. The rib can enhance the diffusivity of the electrolyte solution near the negative electrode plate, so that the PSOC life performance can be improved, and the effect of preventing the permeation-induced short circuit is enhanced. When the electrolyte solution contains aluminum ions, the dissolution of lead is prevented, and hence the effect of preventing the permeation-induced short circuit is enhanced.

The maximum thickness of the separator is, for example, from 0.65 mm to 1.1 mm and can be from 0.65 mm to 0.8 mm. When a relatively thin separator is used as described above, the influence of the inter-electrode distance D on the amount of curvature of the positive electrode plate and the influence on the occurrence rate of the permeation-induced short circuit become large. When the separator includes the base and the rib protruding from at least one main surface of the base, the average thickness of the base is, for example, 100 pm or more and 300 pm or less, and is preferably 150 pm or more and 250 pm or less. The average thickness of the base is determined by measuring the thickness of the base at five freely selected points in a cross-sectional photograph of the separator and averaging the measured thicknesses. The average height of the ribs formed on one main surface is, for example, 0.05 mm or more, preferably 0.07 mm or more, for example, 0.40 mm or less, and preferably 0.20 mm or less. The average height of the ribs formed on the other main surface is, for example, 0.3 mm or more, preferably 0.4 mm or more, for example, 1.0 mm or less, and preferably 0.7 mm or less.

The maximum thickness of the separator may also be 0.65 mm or more, may be 1.1 mm or less, and may also be 0.8 mm or less.

The average thickness of the base of the separator may be 100 pm or more, may also be 150 pm or more, may be 300 pm or less, and may also be 250 pm or less.

The average height of the ribs formed on one main surface may be 0.05 mm or more, may also be 0.07 mm or more, may be 0.40 mm or less, and may also be 0.20 mm or less.

The average height of the ribs formed on the other main surface may be 0.3 mm or more, 0.4 mm or more, 1.0 mm or less, or 0.7 mm or less.

The sheet-shaped separator may be sandwiched between the negative electrode plate and the positive electrode plate, or by storing the negative electrode plate or the positive electrode plate into the bag-like separator, the separator may be interposed between the negative electrode plate and the positive electrode plate. When the bag-shaped separator is used, the electrolyte solution is hardly diffused, but the diffusivity of the electrolyte solution is improved by providing the rib.

### (Electrolyte solution)

The electrolyte solution is an aqueous solution containing sulfuric acid and may be gelled as necessary. The specific gravity of the electrolyte solution in the lead-acid battery in the fully charged state after the chemical conversion is, for example, 1.10 to 1.35 g/cm³ at 20°C and preferably 1.20 to 1.35 g/cm³.

When the electrolyte solution contains aluminum ions, the concentration of the aluminum ions is preferably from 0.02 mol/L to 0.2 mol/L. The concentration of aluminum ions in the electrolyte solution is evaluated by extracting the electrolyte solution from the lead-acid battery in the fully charged state and quantifying Al elements by inductively coupled plasma (ICP) atomic emission spectroscopy. At that time, a specific gravity d of the electrolyte solution is measured. In a lead-acid battery having a plurality of elements connected in series, an electrolyte solution in any one cell is collected in the fully charged state, Al elements are determined quantitatively by an ICP atomic emission spectroscopy, and the concentration of the aluminum ions is calculated. When the quantitative value obtained by ICP atomic emission spectroscopy is M (wt%), the aluminum ion concentration (C_{Al}) is calculated by C_{Al} = 10 × M × d ÷ 26.98.

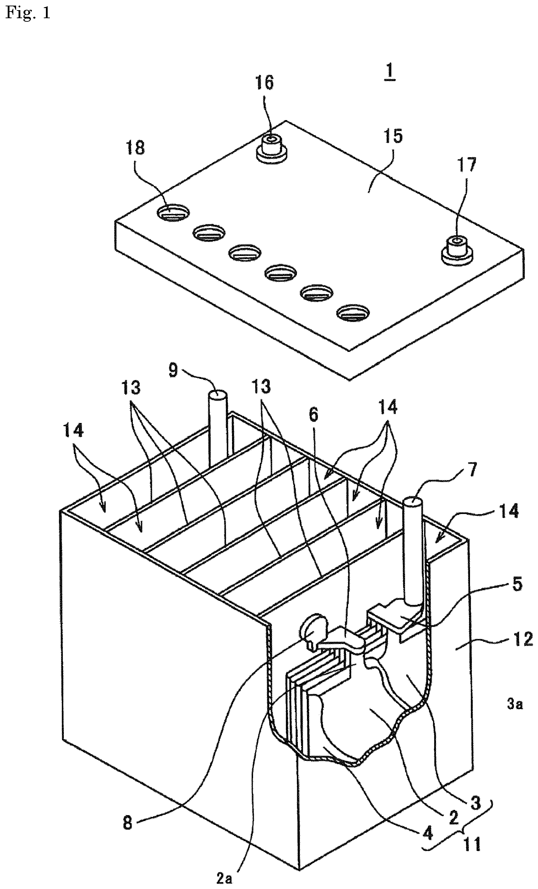

Fig. 1 shows an external view of an example of a lead-acid battery according to an embodiment of the present invention.

A lead-acid battery 1 includes a container 12 storing an element 11 and an electrolyte solution (not shown). The inside of the container 12 is partitioned into a plurality of cell chambers 14 by partitions 13. In each cell chamber 14, one element 11 is stored. The opening of the container 12 is sealed by a lid 15 having a negative electrode terminal 16 and a positive electrode terminal 17. The lid 15 is provided with a vent for each cell chamber, and a vent plug 18 is inserted in the vent. At the time of water addition, the vent plug 18 is removed, and a water-adding solution is supplied.

The element 11 is configured by laminating a plurality of negative electrode plates 2 and positive electrode plates 3, each of which is packaged with a bag-like separator 4. In the cell chamber 14 located at one end of the container 12, a negative electrode shelf 6 for connecting lugs 2a of the plurality of negative electrode plates 2 in parallel is connected to a through-connector 8, and a positive electrode shelf 5 for connecting lugs 3a of the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, a negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the elements 11 of the adjacent cell chambers 14 in series.

The lead-acid battery according to the present invention will be described below.
(1) A lead-acid battery provided with: a negative electrode plate; a positive electrode plate; an element including a separator interposed between the negative electrode plate and the positive electrode plate; and an electrolyte solution. The negative electrode plate includes a negative electrode material containing a first carbon material and a second carbon material, the first carbon material has a particle size of 32 pm or more, the second carbon material has a particle size of less than 32 pm, a ratio of powder resistance R2 of the second carbon material to powder resistance R1 of the first carbon material: R2/R1 is 20 or more and 200 or less, and a distance D between the positive electrode plate and the negative electrode plate and a maximum thickness T of the separator satisfy -0.1 mm ≤ D - T ≤ 0.1 mm.
(2) The lead-acid battery according to (1) above, wherein the distance D and the maximum thickness T satisfy -0.1 mm ≤ D - T ≤ 0 mm.
(3) The lead-acid battery according to (1) or (2) above, wherein the electrolyte solution contains aluminum ions, and a concentration of the aluminum ions is from 0.02 mol/L to 0.2 mol/L.
(4) In any of (1) to (3) above, the content of the first carbon material in the negative electrode material is, for example, 0.05% by mass or more and 3.0% by mass or less, preferably 0.1% by mass or more and 2.0% by mass or less, and more preferably 0.1% by mass or more and 1.5% by mass or less.
   The content of the first carbon material in the negative electrode material may be 0.05% by mass or more, may also be 0.1% by mass or more, may be 3.0% by mass or less, may be 2.0% by mass or less, and may also be 1.5% by mass or less.
(5) In any of (1) to (4) above, the content of the second carbon material in the negative electrode material is, for example, 0.03% by mass or more and 1.0% by mass or less, preferably 0.05% by mass or more and 0.5% by mass or less, and more preferably 0.05% by mass or more and 0.3% by mass or less.

The content of the second carbon material in the negative electrode material may be 0.03% by mass or more, may also be 0.05% by mass or more, may be 1.0% by mass or less, may be 0.5% by mass or less, and may also be 0.3% by mass or less.

Hereinafter, the present invention will be specifically described based on examples and comparative examples, but the present invention is not limited to the following examples.

### <<Lead-acid batteries A1 to A5»

### (1) Preparation of negative electrode plate

A negative electrode paste is obtained by mixing lead powder, water, diluted sulfuric acid, a carbon material, and an organic expander. A mesh portion of an expanded grid made of a Pb-Ca-Sn-based alloy as a negative current collector is filled with the negative electrode paste, which was then cured and dried to obtain a non-chemically converted negative electrode plate. Carbon black (acetylene black, average particle size D₅₀: 35 nm) and graphite (average particle size D₅₀: 110 pm) are used as the carbon material. Lignin is used as the organic expander, and the organic expander is mixed into the negative electrode paste with its additive amount adjusted so that the contents of the organic expander in 100% by mass of the negative electrode material is 0.05% by mass.

### (2) Preparation of positive electrode plate

A positive electrode paste is prepared by mixing lead powder, water, and sulfuric acid. A mesh portion of an expanded grid made of a Pb-Ca-Sn-based alloy is filled with the positive electrode paste, which was then cured and dried to obtain a non-chemically converted positive electrode plate.

### (3) Preparation of lead-acid battery

Each non-chemically converted negative electrode plate is stored into a bag-shaped separator formed using a polyethylene microporous film, and twelve or more elements are formed by combining the non-chemically converted negative electrode plate and the positive electrode plate per cell. The separator has a rib on the positive electrode abutting side.

Liquid type automotive batteries A1 to A5 with a nominal 5-hour rate capacity of 32 Ah and a nominal voltage of 12 V are assembled by inserting an element into a polypropylene container, filling the container with an electrolyte solution, and subjecting the electrode to chemical conversion in the container. As the electrolyte solution, there is used a sulfuric acid aqueous solution with its concentration controlled so that the specific gravity in the fully charged state after the chemical conversion is 1.285 g/cm³. Aluminum sulfate is added to the sulfuric acid aqueous solution so that the concentration of the aluminum ions becomes 0.04 mol/L.

In the present lead-acid battery, the content of the first carbon material in the negative electrode material is set to 1.5% by mass, and the content of the second carbon material is set to 0.3% by mass. The ratio R2/R1 is set to 27, and the (D - T) values are set, as shown in Table 1. The thickness of the negative electrode plate is set to 1.1 mm, the thickness of the positive electrode plate is set to 1.4 mm, and the maximum thickness of the separator is set to 0.80 mm. The (D - T) value, which is the difference between the inter-electrode distance D and the maximum thickness T of the separator, is as shown in Table 1.

However, the above values are the measured values after the element of the prepared lead-acid battery is taken out, washed with water, and dried in the procedure described above. Further, this is a value determined as the content of each carbon material in the negative electrode material (100% by mass) when the negative electrode material is collected from the dried negative electrode plate and the carbon material contained in the negative electrode material is separated into the first carbon material and the second carbon material. The powder resistance R1, the powder resistance R2, and the ratio R2/R1 of each carbon material are also obtained by the procedure described above.

In Table 1, batteries A2, A3, and A4 are examples, and batteries A1 and A5 are comparative examples. The curvature ratio and the occurrence rate of the permeation-induced short circuit are shown in Table 1. Note that the curvature ratio and the occurrence rate of the permeation-induced short circuit are expressed by relative values to the battery B2 to be described later with the battery B2 taken as a reference battery.

### <Curvature ratio>

The lifting distances W are measured for all the positive electrode plates included in the element stored in the cell chamber of the first and fourth cells counted from the positive electrode terminal side, and the average value thereof is determined. Next, at the time when the lifting distance W of the positive electrode plate of the battery B2 is taken as 100%, the relative value of the lifting distance W of the positive electrode plate of the other lead-acid battery to that of the battery B2 is determined and taken as the curvature ratio.

### <Occurrence rate of permeation-induced short circuit>

At the time when the area of the permeation mark of the battery B2 is taken as 100%, the relative value of the area of the permeation mark of the other lead-acid battery to that of the battery B2 is determined and taken as the occurrence rate of the permeation-induced short circuit.

**[Table 1]**

| Battery | Ratio R2/R1 | (D-T) value | Curvature ratio (%) | Permeation-induced short circuit occurrence rate (%) |
|---|---|---|---|---|
| A1 | 27 | 0.2 | 83 | 90 |
| A2 | 27 | 0.1 | 66 | 54 |
| A3 | 27 | 0 | 49 | 31 |
| A4 | 27 | -0.1 | 29 | 30 |
| A5 | 27 | -0.2 | 20 | 80 |

### <<Lead-acid batteries B1 to B5>>

As the carbon material, only carbon black (acetylene black, average particle size D₅₀: 35 nm) is used Except for this, as shown in Table 2, a negative electrode plate is prepared similarly to the lead-acid batteries A1 to A5, and lead-acid batteries B1 to B5 are assembled similarly to lead-acid batteries A1 to A5, except that the obtained negative electrode plate is used. The batteries B1 to B5 are all comparative examples. Table 2 shows the curvature ratio and the occurrence rate of the permeation-induced short circuit.

**[Table 2]**

| Battery | Ratio R2/R1 | (D-T) value | Curvature ratio (%) | Permeation-induced short circuit occurrence rate (%) |
|---|---|---|---|---|
| B1 | - | 0.2 | 115 | 130 |
| B2 | - | 0.1 | 100 | 100 |
| B3 | - | 0 | 74 | 58 |
| B4 | - | -0.1 | 64 | 71 |
| B5 | - | -0.2 | 55 | 135 |

### <<Lead-acid battery C 1»

Carbon black (ketjen black, average particle size D₅₀: 40 nm) and graphite (average particle size D₅₀: 110 pm) are used as the carbon material, and the ratio R2/R1 is set to 15. Except for this, a negative electrode plate is prepared similarly to the lead-acid battery A2, and a lead-acid battery C1 is assembled similarly to the lead-acid battery A2 except that the obtained negative electrode plate is used. The battery C1 is a comparative example.

### <<Lead-acid battery C2>>

Carbon black (furnace black, average particle size D₅₀: 25 nm) and graphite (average particle size D₅₀: 110 pm) are used as the carbon material, and the ratio R2/R1 is set to 155. Except for this, a negative electrode plate is prepared similarly to the lead-acid battery A2, and a lead-acid battery C2 is assembled similarly to the lead-acid battery A2 except that the obtained negative electrode plate is used. The battery C2 is an example.

### <<Lead-acid battery C3>>

Carbon black (furnace black, average particle size D₅₀: 10 nm) and graphite (average particle size D₅₀: 110 pm) are used as the carbon material, and the ratio R2/R1 is set to 205. Except for this, a negative electrode plate is prepared similarly to the lead-acid battery A2, and a lead-acid battery C3 is assembled similarly to the lead-acid battery A2 except that the obtained negative electrode plate is used. The battery C3 is a comparative example.

Table 3 shows the curvature ratios and the occurrence rate of the permeation-induced short circuits of the batteries C1 to C3 together with the values of the battery A2.

**[Table 3]**

| Battery | Ratio R2/R1 | (D-T) value | Curvature ratio (%) | Permeation-induced short circuit occurrence rate (%) |
|---|---|---|---|---|
| C1 | 15 | 0.1 | 93 | 95 |
| A2 | 27 | 0.1 | 66 | 54 |
| C2 | 155 | 0.1 | 62 | 88 |
| C3 | 205 | 0.1 | 72 | 111 |

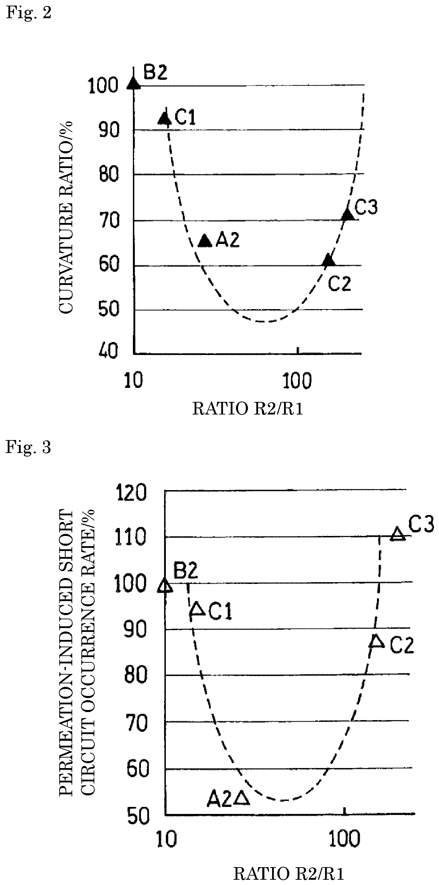

Fig. 2 shows the relationship between the ratio R2/R1 and the curvature ratio of the positive electrode for the batteries A2, B2, and C1 to C3. Fig. 3 shows the relationship between the ratio R2/R1 and the occurrence rate of the permeation-induced short circuit for the same batteries. From Figs. 2 and 3, it can be understood that when the ratio R2/R1 is 20 or more and 200 or less, the curvature ratio becomes smaller and the occurrence rate of the permeation-induced short circuit becomes smaller. Further, it can be seen that the occurrence rate of the permeation-induced short circuits of the batteries A2, C1, and C2 of the embodiment are smaller than that of the battery B2 using only the second carbon material or the carbon black, which is considered to be less likely to cause the permeation-induced short circuit than the case of using the first carbon material or graphite.

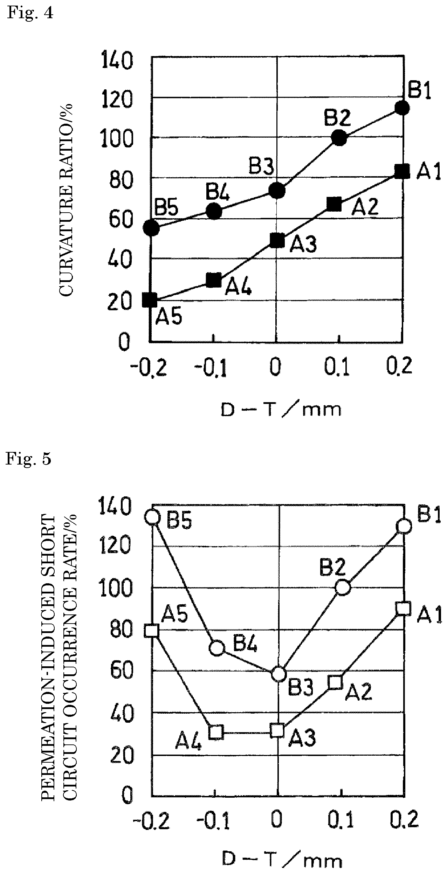

Fig. 4 shows the relationship between the (D - T) value and the curvature ratio of the positive electrode for the batteries A1 to A5 and B1 to B5. Fig. 5 shows the relationship between the (D - T) value and the occurrence rate of the permeation-induced short circuit for the same batteries. From Figs. 4 and 5, it can be seen that, as a whole, the batteries A1 to A5 using both the first carbon material and the second carbon material have significantly lower curvature ratios and occurrence rate of the permeation-induced short circuits than the batteries B1 to B5 using only the second carbon material. In the batteries A2 to A4 of the embodiment in which the (D - T) value is -0.1 mm or more and 0.1 mm or less, the occurrence rate of the permeation-induced short circuit is lower than that of the battery B3 having the lowest occurrence rate of the permeation-induced short circuit among the batteries B1 to B5. Among them, in the batteries A2 and A3 of the embodiment having a (D - T) value of -0.1 mm or more and 0 mm or less, the permeation-induced short circuit is prevented remarkably.

Further, in Fig. 4, the slope calculated from the plots of the batteries B1 to B3 is 205%/mm, whereas the slope calculated from the plots of the batteries A1 to A3 is 170%/mm. That is, when the (D - T) value is positive, the rate of increase in the curvature ratio of the batteries A1 to A3 is 17% less than that of the batteries B1 to B3. The effect of reducing the curvature ratio in this manner is unique to the case where the first carbon material and the second carbon material are used in combination.

Similarly, in Fig. 5, the slope calculated from the plots of the batteries B1 to B3 is 360%/mm, whereas the slope calculated from the plots of the batteries A1 to A3 is 295%. That is, when the (D - T) value is positive, the rate of increase in the occurrence rate of the permeation-induced short circuit of the batteries A1 to A3 is 18% less than that of the batteries B1 to B3. The effect of preventing the permeation-induced short circuit in this manner is unique to the case where the first carbon material and the second carbon material are used in combination.

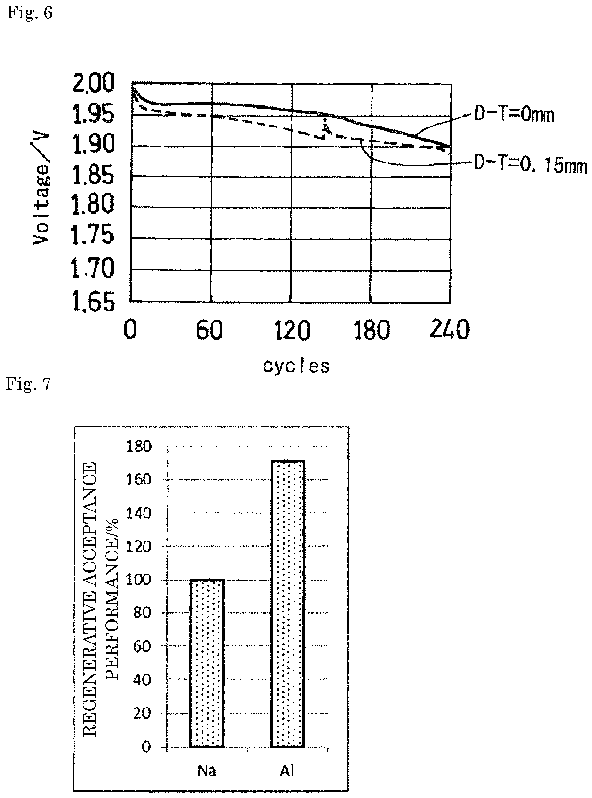

Next, Fig. 6 shows the transition of the discharge end voltage in the deep discharge cycle test of the battery A3. Fig. 6 also shows the transition of the terminal discharge voltage in the deep discharge cycle test of a lead-acid battery D1 (comparative example), which is prepared similarly to the battery A3 except that the (D - T) value is changed to 0.15 mm. It can be understood that by setting the (D - T) value to 0 mm, the terminal discharge voltage is maintained at a considerably high level even after repeated deep discharge cycles as compared with the case of setting the (D - T) value to 0.15 mm. This is considered to be because, in addition to using the first carbon material and the second carbon material in combination so that the ratio R2/R1 is 20 or more and 200 or less, the amount of the electrolyte solution around the electrode plate decreases by decreasing the (D - T) value, and the specific gravity of the electrolyte solution after discharge tends to decrease. At this time, the charge acceptability (efficiency) is improved, and it is conceivable that when the cycle is repeated, the entire surface of the electrode plate is easily used. This is considered to be related to the reduction in the occurrence rate of the permeation-induced short circuit.

Next, Fig. 7 shows the relationship between the regenerative acceptance performance of the battery A1 and the regenerative acceptance performance of a lead-acid battery manufactured similarly to the battery A1 except that sodium sulfate is added to the sulfuric acid aqueous solution in place of aluminum sulfate so that the concentration of sodium ions becomes 0.04 mol/L. It can be understood that the regenerative acceptability is remarkably improved by the aluminum ions. It is conceivable that since the action of the aluminum ions as thus described and the first carbon material and the second carbon material, which form a good conductive network in the negative electrode material, act synergistically, the uniformity of the charge-discharge reaction is further promoted, and the effect of preventing the permeation-induced short circuit is also enhanced.

### INDUSTRIAL APPLICABILITY

The lead-acid battery according to the present invention is suitable mainly for a liquid type lead-acid battery and can be suitably used as a power source for starting an automobile or a motorcycle or a power source for an industrial energy storage apparatus for an electric vehicle (forklift, etc.) or the like.

### DESCRIPTION OF REFERENCE SIGNS

1: lead-acid battery
2: negative electrode plate
2a: negative electrode plate lug
3: positive electrode plate
3a: positive electrode plate lug
4: bag-shaped separator
5: positive electrode shelf
6: negative electrode shelf
7: positive electrode pole
8: through-connector
9: negative electrode pole
11: element
12: container
13: partition
14: cell chamber
15: lid
16: negative electrode terminal
17: positive electrode terminal
18: vent plug

## Claims

1. A lead-acid battery comprising:
a negative electrode plate;
a positive electrode plate;
an element including a separator interposed between the negative electrode plate and the positive electrode plate; and
an electrolyte solution,
wherein
the negative electrode plate includes a negative electrode material containing a first carbon material and a second carbon material,
the first carbon material has a particle size of 32 µm or more,
the second carbon material has a particle size of less than 32 µm, wherein said particle size of the first carbon material and the second carbon material is determined by wet sieving disclosed in Japanese Industrial Standards (JIS) Z8815: 1994 as disclosed in the description,
a distance D between the positive electrode plate and the negative electrode plate and a maximum thickness T of the separator satisfy -0.1 mm ≤ D - T ≤ 0.1 mm, wherein said distance D is determined by a method disclosed in the description, and said maximum thickness T is determined by a method disclosed in the description, **characterized in that**: a ratio of powder resistance R2 of the second carbon material to powder resistance R1 of the first carbon material: R2/R1 is 20 or more and 200 or less, wherein said powder resistance is determined in accordance with JIS K 7194: 1994 under 3.18 MPa pressure as disclosed in the description.

2. The lead-acid battery according to claim 1, wherein the distance D and the maximum thickness T satisfy -0.1 mm ≤ D - T ≤ 0 mm.

3. The lead-acid battery according to claim 1 or 2, wherein the electrolyte solution contains aluminum ions, and a concentration of the aluminum ions is from 0.02 mol/L to 0.2 mol/L.

4. The lead-acid battery according to any one of claims 1 to 3, wherein the R2/R1 is 27 or more and 200 or less.

5. The lead-acid battery according to any one of claims 1 to 4, wherein the R2/R1 is 20 or more and 155 or less.

6. The lead-acid battery according to any one of claims 1 to 5, wherein a content of the first carbon material is 0.05 % by mass or more and 3.0 % by mass or less, wherein the content of the first carbon material is determined by a method disclosed in the description.

7. The lead-acid battery according to any one of claims 1 to 6, wherein a content of the second carbon material is 0.03 % by mass or more and 1.0 % by mass or less, wherein the content of the second carbon material is determined by a method disclosed in the description.

8. The lead-acid battery according to any one of claims 3 to 7, wherein a concentration of aluminum ions is 0.04 mol/L or more and 0.2 mol/L or less.

9. The lead-acid battery according to any one of claims 1 to 8, wherein a thickness of the negative electrode plate is from 1.05 mm to 5.0 mm.

10. The lead-acid battery according to any one of claims 1 to 9, wherein the maximum thickness of the separator is from 0.65 mm to 1.1 mm.

## Patentansprüche

1. Bleiakkumulator, umfassend:
eine Negativelektrodenplatte;
eine Positivelektrodenplatte;
ein Element, aufweisend einen zwischen der Negativelektrodenplatte und der Positivelektrodenplatte eingefügten Separator; und
eine Elektrolytlösung,
wobei
die Negativelektrodenplatte ein Negativelektrodenmaterial aufweist, das ein erstes Kohlenstoffmaterial und ein zweites Kohlenstoffmaterial enthält,
das erste Kohlenstoffmaterial eine Teilchengröße von 32 µm oder mehr aufweist,
das zweite Kohlenstoffmaterial eine Teilchengröße von weniger als 32 µm aufweist, wobei die Teilchengröße des ersten Kohlenstoffmaterials und des zweiten Kohlenstoffmaterials durch Nasssieben, offenbart in Japanese Industrial Standards (JIS) Z 8815: 1994, wie in der Beschreibung offenbart ermittelt ist,
ein Abstand D zwischen der Positivelektrodenplatte und der Negativelektrodenplatte und eine maximale Dicke T des Separators -0,1 mm ≤ D - T ≤ 0,1 mm genügen, wobei der Abstand D mit einem in der Beschreibung offenbarten Verfahren bestimmt ist und die maximale Dicke T mit einem in der Beschreibung offenbarten Verfahren bestimmt ist, **dadurch gekennzeichnet: dass** ein Verhältnis des Pulverwiderstands R2 des zweiten Kohlenstoffmaterials zum Pulverwiderstand R1 des ersten Kohlenstoffmaterials, R2/R1, 20 oder mehr und 200 oder weniger beträgt, wobei der Pulverwiderstand gemäß JIS K 7194: 1994 unter einem Druck von 3,18 MPa wie in der Beschreibung offenbart gemessen ist.

2. Bleiakkumulator nach Anspruch 1, wobei der Abstand D und die maximale Dicke T -0,1 mm ≤ D - T ≤ 0 mm genügen.

3. Bleiakkumulator nach Anspruch 1 oder 2, wobei die Elektrolytlösung Aluminium-Ionen enthält, und eine Konzentration der Aluminium-Ionen von 0,02 mol/l bis 0,2 mol/l beträgt.

4. Bleiakkumulator nach einem der Ansprüche 1 bis 3, wobei das R2/R1 27 oder mehr und 200 oder weniger beträgt.

5. Bleiakkumulator nach einem der Ansprüche 1 bis 4, wobei das R2/R1 20 oder mehr und 155 oder weniger beträgt.

6. Bleiakkumulator nach einem der Ansprüche 1 bis 5, wobei ein Anteil des ersten Kohlenstoffmaterials 0,05 Masse-% oder mehr und 3,0 Masse-% oder weniger beträgt, wobei der Anteil des ersten Kohlenstoffmaterials mit einem in der Beschreibung offenbarten Verfahren bestimmt ist.

7. Bleiakkumulator nach einem der Ansprüche 1 bis 6, wobei ein Anteil des zweiten Kohlenstoffmaterials 0,03 Masse-% oder mehr und 1,0 Masse-% oder weniger beträgt, wobei der Anteil des zweiten Kohlenstoffmaterials mit einem in der Beschreibung offenbarten Verfahren bestimmt ist.

8. Bleiakkumulator nach einem der Ansprüche 3 bis 7, wobei eine Konzentration der Aluminium-Ionen 0,04 mol/l oder mehr und 0,2 mol/l oder weniger beträgt.

9. Bleiakkumulator nach einem der Ansprüche 1 bis 8, wobei eine Dicke der Negativelektrodenplatte von 1,05 mm bis 5,0 mm beträgt.

10. Bleiakkumulator nach einem der Ansprüche 1 bis 9, wobei die maximale Dicke des Separators von 0,65 mm bis 1,1 mm beträgt.

## Revendications

1. Batterie au plomb comprenant :
une plaque d'électrode négative ;
une plaque d'électrode positive ;
un élément comportant un séparateur interposé entre la plaque d'électrode négative et la plaque d'électrode positive ; et
une solution d'électrolyte,
dans laquelle
la plaque d'électrode négative comprend un matériau d'électrode négative contenant un premier matériau de carbone et un second matériau de carbone,
le premier matériau de carbone a une taille de particule de 32 µm ou plus,
le second matériau de carbone a une taille de particule de moins de 32 pm, ladite taille de particule du premier matériau de carbone et du second matériau de carbone étant déterminée par tamisage humide décrit dans les normes industrielles japonaises (JIS) Z8815 : 1994 comme décrit dans la description,
une distance D entre la plaque d'électrode positive et la plaque d'électrode négative et une épaisseur maximum T du séparateur satisfont -0,1 mm ≤ D - T ≤ 0,1 mm, ladite distance D étant déterminée par un procédé décrit dans la description et ladite épaisseur maximum T étant déterminée par un procédé décrit dans la description, **caractérisée en ce que** : un rapport de la résistance de poudre R2 du second matériau de carbone à la résistance de poudre R1 du premier matériau de carbone : R2/R1 est de 20 ou plus et de 200 ou moins, ladite résistance de poudre étant déterminée selon la norme JIS K 7194 : 1994 sous une pression de 3,18 MPa comme décrit dans la description.

2. Batterie au plomb selon la revendication 1, dans laquelle la distance D et l'épaisseur maximum T satisfont T -0,1 mm ≤ D - T ≤ 0 mm.

3. Batterie au plomb selon la revendication 1 ou 2, dans laquelle la solution d'électrolyte contient des ions aluminium et une concentration des ions aluminium est de 0,02 mole/L à 0,2 mole/L.

4. Batterie au plomb selon l'une quelconque des revendications 1 à 3, dans laquelle le R2/R1 est de 27 ou plus et de 200 ou moins.

5. Batterie au plomb selon l'une quelconque des revendications 1 à 4, dans laquelle le R2/R1 est de 20 ou plus et de 155 ou moins.

6. Batterie au plomb selon l'une quelconque des revendications 1 à 5, dans laquelle une teneur du premier matériau de carbone est de 0,05 % en masse ou plus et de 3,0 % en masse ou moins, la teneur du premier matériau de carbone étant déterminée par un procédé décrit dans la description.

7. Batterie au plomb selon l'une quelconque des revendications 1 à 6, dans laquelle une teneur du second matériau de carbone est de 0,03 % en masse ou plus et de 1,0 % en masse ou moins, la teneur du second matériau de carbone étant déterminée par un procédé décrit dans la description.

8. Batterie au plomb selon l'une quelconque des revendications 3 à 7, dans laquelle une concentration d'ions aluminium est de 0,04 mole/L ou plus et de 0,2 mole/L ou moins.

9. Batterie au plomb selon l'une quelconque des revendications 1 à 8, dans laquelle une épaisseur de l'électrode négative est de 1,05 mm à 5,0 mm.

10. Batterie au plomb selon l'une quelconque des revendications 1 à 9, dans laquelle l'épaisseur maximum du séparateur est de 0,65 mm à 1,1 mm.
